# EUROPÄISCHE PATENTSCHRIFT

(11) **EP 1 882 298 B1**
(45) Veröffentlichungstag und Bekanntmachung des Hinweises auf die Patenterteilung: **10.08.2011**
(21) Anmeldenummer: 06722823.9
(22) Anmeldetag: 22.04.2006
(51) Int. Cl.: H02M 7/5383, H02M 3/338

(54) **WECHSELRICHTER**
POWER INVERTER
ONDULEUR

(30) Priorität: 20.05.2005 DE 102005023291
(43) Veröffentlichungstag der Anmeldung: 30.01.2008
(73) Patentinhaber: SMA Solar Technology AG, 34266 Niestetal (DE)
(72) Erfinder: VICTOR, Matthias, 34266 Niestetal (DE); MÜLLER, Burkhard, 34123 Kassel (DE); FALK, Andreas, 34131 Kassel (DE)
(74) Vertreter: Walther, Walther & Hinz GbR
(86) Internationale Anmeldenummer: PCT/DE2006/000705
(87) Internationale Veröffentlichungsnummer: WO 2006/125409

(56) Entgegenhaltungen:
- EP-A- 1 227 570
- EP-A- 1 427 091
- DE-A1- 10 112 982
- DE-A1- 19 827 872
- US-A- 4 533 986
- US-A- 5 500 576
- US-B1- 6 583 999
- PRASAD A R ET AL: "AN ACTIVE POWER FACTOR CORRECTION TECHNIQUE FOR THREE-PHASE DIODE RECTIFIERS" IEEE TRANSACTIONS ON POWER ELECTRONICS, IEEE SERVICE CENTER, PISCATAWAY, NJ, US, Bd. 6, Nr. 1, Januar 1991 (1991-01), Seiten 83-92, XP000175322 ISSN: 0885-8993
- PATENT ABSTRACTS OF JAPAN Bd. 1998, Nr. 11, 30. September 1998 (1998-09-30) & JP 10 155280 A (OMRON CORP), 9. Juni 1998 (1998-06-09)
- PATENT ABSTRACTS OF JAPAN Bd. 2002, Nr. 05, 3. Mai 2002 (2002-05-03) & JP 2002 010497 A (SHARP CORP), 11. Januar 2002 (2002-01-11)

## Beschreibung

Die Erfindung betrifft einen Wechsetrichter zum Anschluβau einen. Photovoltaikgenerator.

Ein Eingangsumrichter für Schienenfahrzeuge ist aus der DE 198 27 872 A1 bekannt. Dieser besteht aus einem Resonanzwandler mit galvanischer Trennung. Die Ausgangsspannung steht in einem festen Verhältnis zu der Eingangsspannung. Im verlustoptimalen Betrieb stehen Ausgangsspannung und Eingangsspannung in einem festen Verhältnis zueinander, das durch das Übersetzungsverhältnis des Transformators bestimmt ist.

Wechselrichter von Photovoltaikanlagen müssen aufgrund variierender Umgebungsbedingungen (Einstrahlung, Temperatur, ...) und unterschiedlicher Generatorauslegung für einen weiten Eingangsspannungsbereich ausgelegt sein und gleichzeitig über diesen gesamten Bereich einen hohen Wirkungsgrad besitzen.

Aus der EP 1 531 542 A2 ist ein Wechselrichter mit galvanischer Trennung und mit einem DC-Eingang zum Anschluss eines Photovoltaikgenerators und einem Ausgang zur Einspeisung in ein Wechselstrom-Netz mit einer Netzbrücke bekannt. Hierbei werden Resonanzwandler eingesetzt. Die zu ersetzenden Hochsetzsteller haben die Aufgabe, die Leistung der Photovoltaikmodule zu maximieren.

Aus der JP 2002010496 ist eine Wechselrichterschaltung mit einem Hochsetzsteller mit anschließender Brückenschaltung bekannt. Der Hochsetzsteller soll den Betrieb sichern, wenn die Eingangsspannung zu niedrig ist. Weiterhin sollen zulässige Halbleiterspannungen eingehalten werden.

Der Erfindung liegt die Aufgabe zugrunde, einen Wechselrichter zu schaffen, der bei einem weiten Eingangsspannungsbereich, wie er bei Photovoltaikanlagen und variablen Netzspannungen vorliegt, eine galvanische Trennung bereitstellt, wobei der Wirkungsgrad über den gesamten Eingangsspannungsbereich optimiert werden soll.

Diese Aufgabe wird durch einen Wechselrichten nach Anspruch 1 gelöst.

Durch die Erfindung wird erreicht, dass bei Einstrahlungs- und Temperaturschwankungen der Photovoltaikmodule oder unterschiedlicher Photovoltaikmodulkonfigurationen der Wechselrichter mit optimalem- Wirkungsgrad betrieben wird. Die Schaltverluste werden dadurch minimiert, dass der Resonanzwandler unabhängig von der Eingangsspannung in einem konstanten Betriebspunkt arbeitet, wobei dieser Betriebspunkt durch den Hochsetzsteller über einen weiten Eingangsspannungsbereich eingestellt wird. Unter der Voraussetzung, dass die Spannung am Resonanzwandler stabilisiert wird, ist dabei ein Hochsetzsteller gegenüber einem Tiefsetz-steller insofern günstiger, als der Resonanzwandler bei höheren, stabilisierten Eingangsspannungen einen höheren Wirkungsgrad erreicht.

Der erfindungsgemäße Wechselrichter kombiniert Vorteile in Bezug auf Spannungsanpassung und Betrieb eines HF-Kreises im optimalen Betriebspunkt, ohne die Nachteile einer ungünstigen Strom-Spannungsauslegung, einer hohen Taktfrequenz der Anpassungsstufe, Schaltüberspannungen und einen eingeschränkten Betriebsbereich in Kauf nehmen zu müssen.

In einer vorteilhaften Weiterbildung des erfindungsgemäßen Wandlers ist vorgesehen, dass der Wechselrichter als einphasiger Wechselrichter ausgebildet ist, wobei eine leistungselektronische Halbbrückenschattung, eine Reihenresonanzkapazität und ein Hochfrequenztransformator vorhanden sind. Während der Resonanzwandler in einem konstanten Betriebspunkt arbeitet, so dass seine Ein- und Ausgangsspannung in einem festen - durch das Übersetzungsverhältnis des Transformators vorgegebenen - Verhältnis zueinander steht, kann die Eingangsspannung am Hochsetzsteller variieren.

Der Hochsetzsteller kann vorteilhaft so ausgebildet werden, dass er immer im Lückbetrieb arbeitet, damit die Freilaufdiode des Hochsetzstellers nie hart abkommutiert wird. Dadurch vermindern sich die EMV-Störungen und der Wirkungsgrad verbessert sich durch Vermeiden von Einschaltverlusten.

Der Hochsetzsteller braucht nicht angesteuert zu werden, wenn die Eingangsspannung U₀ groß genug ist, so dass die Spannung am Kondensator C_{netz} ausreicht, um ins Netz einspeisen zu können. Daher wird er nur angesteuert, wenn die aktuelle Netzspannung so groß ist, dass die aktuelle PV-Spannung nicht ausreicht, die Spannung an C_{Netz} einzustellen.

Bei einem solchen Verfahren wird eine deutliche Verbesserung des Wirkungsgrades erzielt, da in Betriebspunkten ohne Hochsetzstellerbetrieb nur kleine Verluste auftreten. Dies ist besonders wirkungsvoll, wenn die Hochsetzstellerdrosseln bedingt durch die Auslegung für den Lückbetrieb besonders klein sind und daher sehr geringe ohmsche Widerstände aufweisen.

Zweckmäßigerweise liegt die Taktfrequenz der Halbbrückenschaltung unterhalb der Resonanzfrequenz. Diese ergibt sich aus der Streuinduktivität des Transformators und der Reihenresonanzkapazität. Hierdurch wird erreicht, dass die Halbleiter sowohl stromlos ein- als auch ausschalten.

Nach einer weiteren vorteilhaften Weiterbildung der Erfindung ist eine synchrone Ansteuerung des Hochsetzstellers und des Resonanzwandlers vorgesehen. Die synchrone Ansteuerung hat den Vorteil, dass die effektive Strombelastung in den Kondensatoren (C3, C4) vermindert wird.

Besonders günstig ist es, wenn der Transformator als Planartransformator mit zwei Leiterplatten ausgebildet ist, wobei die Primärwicklung auf der einen Leiterplatte und die Sekundärwicklung auf der anderen Leiterplatte angeordnet ist. Dies bietet den Vorteil, dass die Leiterplatten über den magnetischen Fluss gekoppelt sind und somit auf teure Steckverbinder verzichtet werden kann. Ein Gussgehäuse, das preiswerter als ein entsprechendes Blechgehäuse herzustellen ist, weist Vorsprünge derart auf, dass ein solcher Planartransformator mit zwei überlappenden Leiterplatten kühltechnisch gut eingebunden werden kann.

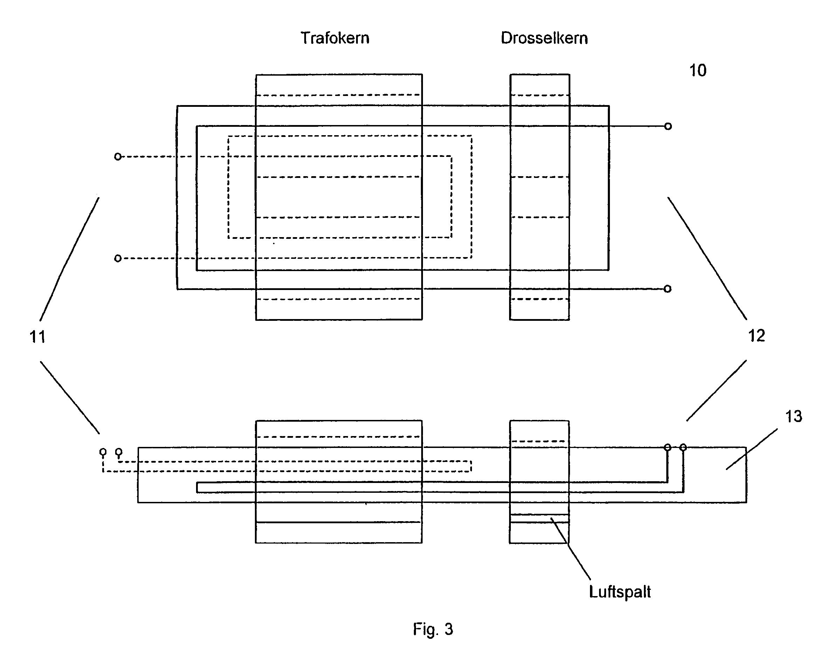

Die Streuinduktivität des Planartransformators kann besonders günstig durch das Einfügen eines zusätzlichen Drosselkerns mit Luftspalt vergrößert werden (Fig. 3).

Weitere vorteilhafte Ausgestaltungen der Erfindung sind in den Unteransprüchen gekennzeichnet.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: ein Schaltbild eines erfindungsgemäßen Wechselrichters,
- Fig. 2: ein Spannungs- / Stromdiagramm des Resonanzwandiers,
- Fig. 3: eine Darstellung eines Planartransformators, und
- Fig. 4: eine Schnittdarstellung des Planartransformator;
- Fig. 5: zeigt eine vorteilhafte Schaltvariante zu Fig. 1.

In den Figuren sind gleiche Teile mit denselben Bezugszeichen versehen.

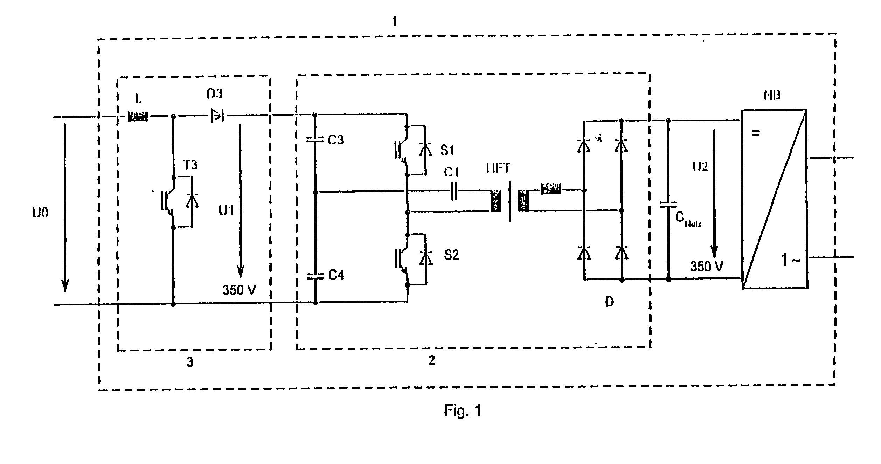

Fig. 1 zeigt einen erfindungsgemäßen Wechselrichter 1 für Photovoltaikanlagen. Dieser umfasst einen Hochsetzsteller 3, einen Resonanzwandler 2 und eine Netzbrücke NB. Der Resonanzwandler besteht aus einer Halbbrückenschaltung mit den Halbleiterschaltern S1, S2, einem HF-Transformator HFT, der mit einer Reihenresonanzkapazität bzw. einem Kondensator C1 versehen ist, und einer Halbleiterbrücke D. Ein- und Ausgangsspannung des Resonanzwandlers 2 stehen in einem - durch das Übersetzungsverhältnis des Transformators vorgegebenen - festen Verhältnis zueinander. Der Resonanzwandler bildet mit der Diodenbrücke D einen HF-Kreis.

Erfindungsgemäß ist dem Resonanzwandler 2 ein Hochsetzsteller 3 vorgeschaltet. Alternativ kann aber auch ein Tiefsetzsteller vorgeschaltet sein.

Der Hochsetzsteller dient zur Spannungsanpassung, von Spannungsschwankungen des Photovoltaikgenerators, die aufgrund unterschiedlicher Betriebsbedingungen (Sonneneinstrahlung, Temperatur, ...), durch unterschiedliche Generatorauslegungen oder durch dynamische Anpassungen an unterschiedliche Netzspannungshöhen auftreten können.

Der Hochsetzsteller besteht aus einer Reihendrossel L, einem Schaltelement T3 und Diode D3, welche parallel zur Halbbrückenschaltung sowie zu einer Reihenschaltung zweier Kondensatoren C₃, C₄ angeordnet sind. Die Kapazität der Kondensatoren C₃, C₄ ist dabei größer als die Reihenresonanzkapazität (Kondensator C₁).

Der Hochsetzsteller arbeitet bei einem Eingangsspannungsbereich U₀ von 150 Volt bis 350 Volt. Die nach dem Hochsetzsteller anliegende Spannung U₁ beträgt etwa 350 Volt. Die Spannung U₂ am Ausgang des Resonanzwandlers beträgt ebenfalls 350 Volt. Bei höheren Eingangsspannungen als 350 Volt wird der Hochsetzteller nicht getaktet und die Spannungen U₁ und U₂ steigen proportional mit U₀ an.

Der resonante DC/DC-Wandler 2 wird mit der in Fig. 1 gezeigten Schaltung unidirektional betrieben. Andere Schaltungsanordnungen für einen bidirektionalen Betrieb sind jedoch auch möglich.

Der Hochsetzsteller 3 und der Resonanzwandler 2 werden synchron angesteuert, um die Effektivstrombelastung in den Kondensatoren zu reduzieren.

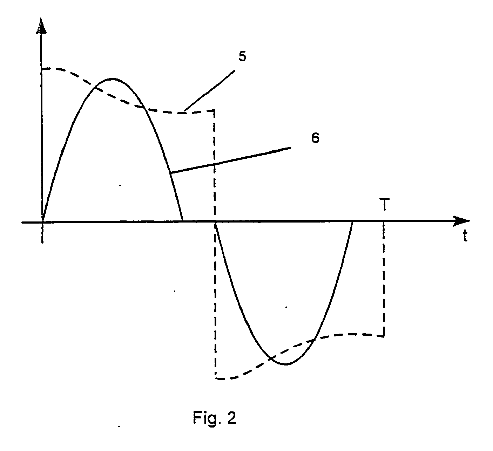

Fig. 2 zeigt die Transformatorspannung 5 und den Transformatorstrom 6 mit der Periodendauer T=1/f_{schalt}, wobei f_{schalt} die Schaltfrequenz des HF-Kreises ist

Bevorzugterweise liegt die Taktfrequenz der Halbbrückenschaltung unterhalb der Resonanzfrequenz, die sich aus der Streuinduktivität des Transformators und der Reihenresonanzkapazität ergibt.

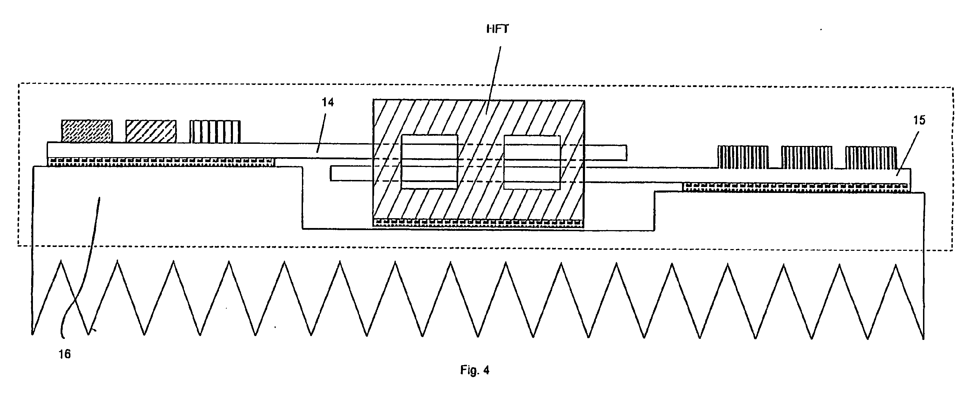

Der Transformator HFT ist, wie die Figuren 3 und 4 veranschaulichen, als Planartransformator 10 ausgebildet. Dieser weist eine Primärwicklung 11 und eine Sekundärwicklung 12 auf, die auf einer Leiterplatte 13 bzw. zwei Leiterplatten 14 und 15 (Fig. 4) angeordnet sind. Die Leiterplattenanordnung ist über zwei isolierende Wärmeleitfolien mit einem Aluminiumgussgehäuse 16 verbunden. Auf den Leiterplatten 14 und 15 sind die Leitungshalbleiter, insbesondere als SMD-Bauteile montiert.

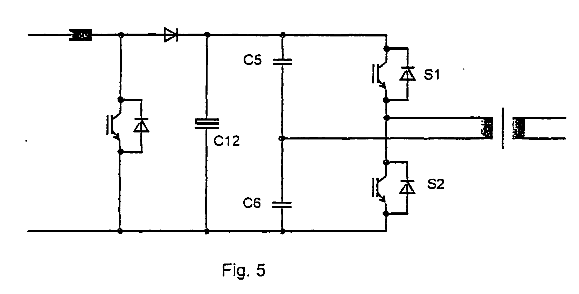

Fig. 5 zeigt eine Schaltungsvariante, bei der der laststromführende Kondensator C1 entfällt und die Resonanzkapazität in Form von C 5und C6 in den DC-Kreis gezogen wird. Die Kondensatoren C3 und C4 mit relativ großer Kapazität werden durch einen einzigen Kondensator C₁₂ ersetzt. Parallel hierzu sind zwei kleinere Resonanzkondensatoren C5, C6 mit kleiner Kapazität geschaltet. Diese Schaltung hat einerseits den Vorteil, dass die Summe der Kondensatorströme kleiner wird und damit die Kosten der Kondensatoren sinken und andererseits können die Schaltverluste deutlich reduziert werden.

Bei der Schaltung gemäß Fig. 5 sind die Schaltverluste geringer als bei der Schaltung gemäß Fig. 1, da der Magnetisierungsstrom des Transformators während der Freiwerdezeit, in der beide Schalter offen sind, eine Entladung der parasitären Schalterkapazitäten bewirkt und damit die Schalterspannung vor dem Wiedereinschalten von S1 bzw. S2 auf den Wert der jeweiligen Resonanzkondensatorspannung abzüglich der halben Zwischenkreisspannung reduziert.

Bei der Schaltung entsprechend Fig. 1 hingegen können sich die parasitären Schalterkapazitäten von S1 und S2 in der Freiwerdezeit vor dem Wiedereinschalten nur auf den Wert der Resonanzkapazität C1 entladen, so dass die Schaltverluste entsprechend höher sind.

### Bezugszeichenliste:

- 1: Wechselrichter
- 2: Resonanzwandler
- 3: Hochsetzsteller
- 4: Tiefsetzsteller
- 5: Transformatorspannung
- 6: Transformatorstrom
- 10: Planartransformator
- 11: Primärwicklung
- 12: Sekundärwicklung
- 13-15: Leiterplatten

- HFT: HF-Transformator
- S1, S2: Halbleiterschalter
- D: Halbleiterbrücke
- L: Reihendrossel
- C_{netz}: Kondensator im Eingang der Netzbrücke
- NB: Netzbrücke

## Patentansprüche

1. Wechselrichter mit galvanischer Trennung und mit einem DC-Eingang zum Anschluss eines Photovoltaikgenerators und einem Ausgang zur Einspeisung in ein Netz mit einer Netzbrücke (NB), bei dem:
a) am DC-Eingang ein Resonanzwandler (2) mit vorgeschaltetem Hochsetzsteller (3) oder Tiefsetzsteller zur Spannungsanpassung für Spannungsschwankungen des Photovoltaikgenerators vorhanden Ist,
b) der Resonanzwandler unabhängig von der Eingungs spannung in einem konstanten Betrieb spunkt arbeitet, wobei dieser Betriebspunkt durch den Hochsetzsteller oder den Tiefsetzsteller über einen Eingangsspannungsbereich eingestellt wird.

2. Wechselrichter nach Anspruch 1,
**dadurch gekennzeichnet,**
**dass** dem Resonanzwandler nur ein Hochsetzsteller (3) vorgeschaltet ist.

3. Wechselrichter nach Anspruch 1 oder 2,
**dadurch gekennzeichnet,**
**dass** der Wechselrichter als einphasiger Wechselrichter ausgebildet ist.

4. Wechselrichter nach einem der vorhergehenden Ansprüche,
**dadurch gekennzeichnet**
**dass** der Resonanzwandler eine leistungselektronische Halbbrückenschaltung (S1, S2), eine Reihenresonanzkapazität (C₁) und einen Hochfrequenztransformator (HFT) aufweist.

5. Wechselrichter nach Anspruch 4,
**dadurch gekennzeichnet,**
**dass** die Taktfrequenz der Halbbrückenschaltung unterhalb der Resonanzfrequenz liegt, die sich aus der Streuinduktivität des Transformators und der Reihenresonanzkapazität (C₁) ergibt.

6. Wechselrichter nach einem der vorhergehenden Ansprüche,
**gekennzeichnet durch**
eine synchrone Ansteuerung des Hochsetzstellers (3) und des Resonanzwandlers (2).

7. Wechselrichter nach einem der vorhergehenden Ansprüche,
**dadurch gekennzeichnet,**
**dass** der Hochsetzsteller (3) im Lückbetrieb betrieben wird.

8. Wechselrichter nach einem der vorhergehenden Ansprüche,
**dadurch gekennzeichnet,**
**dass** der Hochsetzteller (3) mit variabler Taktfrequenz betrieben wird.

9. Wechselrichter nach einem der vorhergehenden Ansprüche,
**dadurch gekennzeichnet,**
**dass** der Transformator als Planartransformator (10) ausgebildet ist.

10. Wechselrichter nach Anspruch 9,
**dadurch gekennzeichnet,**
**dass** Streuinduktivität des Planartransformators durch das Einfügen eines Drosselkerns mit Luftspalt, der nur mit der Primärwicklung oder nur mit der Sekundärwicklung bewickelt ist, vergrößert wird.

11. Wechselrichter nach Anspruch 9,
**dadurch gekennzeichnet,**
**dass** er ein Gussgehäuse (16) umfasst, das derart abgestufte Kontaktflächen zur wärmtechnischen Anbindung aufweist, dass der Planartransformator und zwei überlappende Leiterplatten angebunden werden können.

12. Wechselrichter nach einem der Ansprüche 9 bis 11,
**dadurch gekennzeichnet,**
**dass** der Planartransformator mit zwei überlappenden Leiterplatten (14, 15) versehen ist.

13. Wechselrichter nach einem der vorhergehenden Ansprüche,
**gekennzeichnet durch**
ein Ansteuerverhalten, das den Hochsetzsteller nur dann ansteuert, wenn die Zwischenkreisspannung am Kondensator C_{netz} kleiner wird als sie zur Netzeinspeisung im aktuellen Betriebspunkt erforderlich ist.

14. Wechselrichter nach einem der vorhergehenden Ansprüche,
**dadurch gekennzeichnet,dass**
die Resonanzkapazitäten (C5 und C6) im DC-Kreis angeordnet sind.

15. Wechselrichter nach Anspruch 14,
**dadurch gekennzeichnet, dass**
parallel zu den Resonanzkapazitäten (C5 und C6) ein großer DC-Filterkondensator (C12) angeordnet ist.

## Claims

1. Inverter with galvanic isolation and with a DC input for connection of a photovoltaic generator and an output for feed into a mains with a mains bridge (NB), in which:
a) a resonance converter (2) with an upstream step-up converter (3) or step-down converter for voltage adaptation for voltage fluctuations of the photovoltaic generator is present at the DC input and
b) the resonance converter operates at a constant operating point independently of the input voltage, wherein this operating point is set by the step-up converter or the step-down converter over an input voltage range.

2. Inverter according to claim 1, **characterised in that** only a step-up converter (3) is connected upstream of the resonance converter.

3. Inverter according to claim 1 or 2, **characterised in that** the inverter is constructed as a single-phase inverter.

4. Inverter according to any one of the preceding claims, **characterised in that** the resonance converter comprises an electronic power half-bridge circuit (S1, S2), a series resonance capacitance (C1) and a high-frequency transformer (HFT).

5. Inverter according to claim 4, **characterised in that** the clock frequency of the half-bridge circuit lies below the resonance frequency, which results from the leakage inductance of the transformer and the series resonance capacitance (C1).

6. Inverter according to any one of the preceding claims, **characterised by** a synchronous drive control of the step-up converter (3) and the resonance converter (2).

7. Inverter according to any one of the preceding claims, **characterised in that** the step-up converter (3) is operated in intermittent flow.

8. Inverter according to any one of the preceding claims, **characterised in that** the step-up converter (3) is operated at variable clock frequency.

9. Inverter according to any one of the preceding claims, **characterised in that** the transformer is constructed as a planar transformer (10).

10. Inverter according to claim 9, **characterised in that** the leakage inductance of the planar transformer is increased by insertion of a choke core with an air gap, the choke core being wound only by the primary winding or only by the secondary winding.

11. Inverter according to claim 9, **characterised in that** it comprises a cast housing (16) which has contact surfaces for thermal coupling stepped in such a manner that the planar transformer and two overlapping circuitboards can be coupled.

12. Inverter according to any one of claims 9 to 11, **characterised in that** the planar transformer is provided with two overlapping circuitboards (14, 15).

13. Inverter according to any one of the preceding claims, **characterised by** a drive behaviour which drives the step-up converter only when the intermediate circuit voltage at the capacitor C_{netz} is smaller than required for the mains feed at the instantaneous operating point.

14. Inverter according to any one of the preceding claims, **characterised in that** the resonance capacitances (C5 and C6) are arranged in the DC circuit.

15. Inverter according to claim 14, **characterised in that** a large DC filter capacitor (C12) is arranged parallel to the resonance capacitances (C5 and C6).

## Revendications

1. Onduleur comportant une coupure galvanique, une entrée de courant continu pour le raccordement d'un générateur photovoltaïque et une sortie pour l'injection dans un réseau avec un pont de réseau (NB), dans lequel :
a) il est prévu à l'entrée de courant continu un convertisseur à résonance (2) en amont duquel est connecté un régulateur élévateur (3) ou un régulateur abaisseur destiné à l'adaptation de la tension en réponse aux fluctuations de tension du générateur photovoltaïque,
b) le convertisseur à résonance travaille à un point de fonctionnement constant indépendamment de la tension d'entrée, ce point de fonctionnement étant réglé dans un intervalle de tension d'entrée par le régulateur élévateur ou par le régulateur abaisseur.

2. Onduleur selon la revendication 1,
**caractérisé en ce que**
seul un régulateur élévateur (3) est intercalé en amont du convertisseur à résonance.

3. Onduleur selon la revendication 1 ou 2,
**caractérisé en ce que**
l'onduleur est constitué par un onduleur monophasé.

4. Onduleur selon l'une des revendications précédentes,
**caractérisé en ce que**
le convertisseur à résonance comporte un circuit électronique de puissance en demi-pont (S1, S2), une capacité de résonance série (C₁) et un transformateur à haute fréquence (HFT).

5. Onduleur selon la revendication 4,
**caractérisé en ce que**
la fréquence d'horloge du circuit en demi-pont se trouve au-dessous de la fréquence de résonance, qui résulte de l'inductivité diffuse du transformateur et de la capacité de résonance série (C₁).

6. Onduleur selon l'une des revendications précédentes,
**caractérisé par**
une excitation synchrone du régulateur élévateur (3) et du convertisseur à résonance (2).

7. Onduleur selon l'une des revendications précédentes,
**caractérisé en ce que**
le régulateur élévateur (3) travaille en fonctionnement discontinu.

8. Onduleur selon l'une des revendications précédentes,
**caractérisé en ce que**
le régulateur élévateur (3) travaille avec une fréquence d'horloge variable.

9. Onduleur selon l'une des revendications précédentes,
**caractérisé en ce que**
le transformateur est constitué par un transformateur plan. (10).

10. Onduleur selon la revendication 9,
**caractérisé en ce que**
l'inductivité diffuse du transformateur plan est renforcée par l'addition d'un noyau de réactance qui est bobiné uniquement avec l'enroulement primaire ou uniquement avec l'enroulement secondaire.

11. Onduleur selon la revendication 9,
**caractérisé en ce que**
il comporte une carcasse en fonte (16) qui comporte des surfaces de contact destinées à la liaison thermique qui sont agencées de telle manière que le transformateur plan et deux cartes de circuits imprimés disposées à recouvrement puissent être connectés.

12. Onduleur selon l'une des revendications 9 à 11,
**caractérisé en ce que**
le transformateur plan est pourvu de deux cartes de circuits imprimés (14, 15) disposées à recouvrement.

13. Onduleur selon l'une des revendications précédentes,
**caractérisé par**
un comportement d'excitation qui n'excite le régulateur élévateur que lorsque la tension de circuit intermédiaire aux bornes du condensateur C_{netz} devient inférieure à la valeur qui serait nécessaire pour l'alimentation du réseau au point de fonctionnement actuel.

14. Onduleur selon l'une des revendications précédentes,
**caractérisé en ce que**
les capacités de résonance (C5 et C6) sont disposées dans le circuit de courant continu.

15. 15 Onduleur selon la revendication 14,
**caractérisé en ce que**
un gros condensateur filtre de courant continu (C12) est connecté en parallèle avec les capacités de résonance (C5 et C6).
